(19) Europäisches Patentamt
European Patent Office
Office européen des brevets

(11) EP 0 693 361 B1

(12) **EUROPEAN PATENT SPECIFICATION**

(45) Date of publication and mention
of the grant of the patent:
**29.09.1999 Bulletin 1999/39**

(51) Int. Cl.⁶: **B29C 69/00**, B29C 65/48
// B29L22:00

(21) Application number: **95110749.9**

(22) Date of filing: **10.07.1995**

(54) **A method of connecting a pair of elements of a structure by gluing and a plant for implementing the method**

Ein Verfahren zum Verbinden von zwei Bauelementen mit einem Bindemittel und Anlage zur Durchführung des Verfahrens

Méthode pour connecter deux pièces de construction par un adhésif et installation pour la mise en oeuvre du procédé

(84) Designated Contracting States:
**DE ES FR GB SE**

(30) Priority: **21.07.1994 IT TO940601**

(43) Date of publication of application:
**24.01.1996 Bulletin 1996/04**

(73) Proprietor: **FIAT AUTO S.p.A.**
**10135 Torino (IT)**

(72) Inventor: **Da Re', Mario**
**I-10128 Torino (IT)**

(74) Representative:
**Serra, Francesco et al**
**c/o JACOBACCI & PERANI S.p.A.**
**Corso Regio Parco, 27**
**10152 Torino (IT)**

(56) References cited:
WO-A-88/03068          BE-A- 666 438
FR-A- 2 553 477          US-A- 2 589 786

**Description**

The present invention relates to a method of connecting a pair of elements of a structure by gluing, comprising the following steps:

- forming, in a single press and in mutually facing positions, first and second elements which can be connected by gluing along their coupling surfaces,

- interposing an adhesive material between the coupling surfaces of the elements, and

- coupling the elements by subjecting them to compression in the press.

A method of the type indicated above is known from the Applicant's European patent application EP-A-336 906. In this method, the adhesive material is spread, in conventional manner, on the coupling surfaces of at least one of the elements to be glued together, for example, manually by an operator when the dies of the press are in the open condition. To allow the operator to spread the adhesive, the press has to be kept in its open configuration for a predetermined period of time, which adversely affects the overall duration of the production cycle of the structure as a whole. Moreover, the operator entrusted with the spreading of the adhesive has to work under extremely unpleasant environmental conditions since he is subjected directly both to the heat necessary for the moulding process and to the vapours of the adhesive material which often have an unpleasant smell.

Since the manual spreading of the adhesive material takes a considerable time, the adhesive is subject to different temperatures on different portions of the coupling surface because it is spread at different moments onto regions having different amounts of residual heat, so that its characteristics may not be uniform along the coupling surfaces of the elements to be connected.

In order to prevent the aforementioned problems, the subject of the present invention is a method of the type specified above, which also comprises the steps of:

- providing a backing sheet,

- spreading the adhesive material on the backing sheet, at least along a predetermined outline corresponding to the coupling surfaces of the elements,

- feeding the backing sheet between the two elements so that the adhesive material is disposed at least along said coupling surfaces, and

- coupling the elements with the interposition of the backing sheet bearing the adhesive material.

By virtue of these characteristics, the method according to the invention optimizes the times taken by the production cycles of the structure since the spreading of the adhesive material is carried out outside the press and does not therefore affect these times. Moreover, the adhesive material is applied simultaneously over the whole extent the coupling surfaces of the elements so as not to give rise to non-uniform characteristics, and use can advantageously be made of the residual heat stored in the moulded elements to bring about prepolymerization of the adhesive material.

A further subject of the invention is a plant for producing a shell-like structure including a pair of half-shells of plastics material which can be connected by gluing, comprising in combination:

- a press having a pair of parallel main dies movable relative to one another along a common axis of movement between a position in which they are spaced apart and a position in which they are close together, and an intermediate die movable transverse the axis of movement of the two main dies, in which the dies can adopt a closed moulding configuration in which both of the main dies are brought close to the intermediate die so that respective cavities defining the shapes of the half-shells are defined between the main dies and the intermediate die, and an open configuration in which the main dies are spaced apart and the intermediate die is moved away from the common axis of movement of the main dies, characterised in that it further comprises:

- a backing sheet disposed close to the press,

- supply means for spreading an adhesive material on the backing sheet at least along a predetermined outline corresponding to the coupling surfaces of the half-shells,

-     transfer means for the backing sheet, for feeding it between the two main dies in their open configuration, adjacent the coupling surfaces of the elements.

Further characteristics and advantages of the present invention will become clearer from the following detailed description, given with reference to the appended drawings, provided purely by way of non-limiting example, in which:

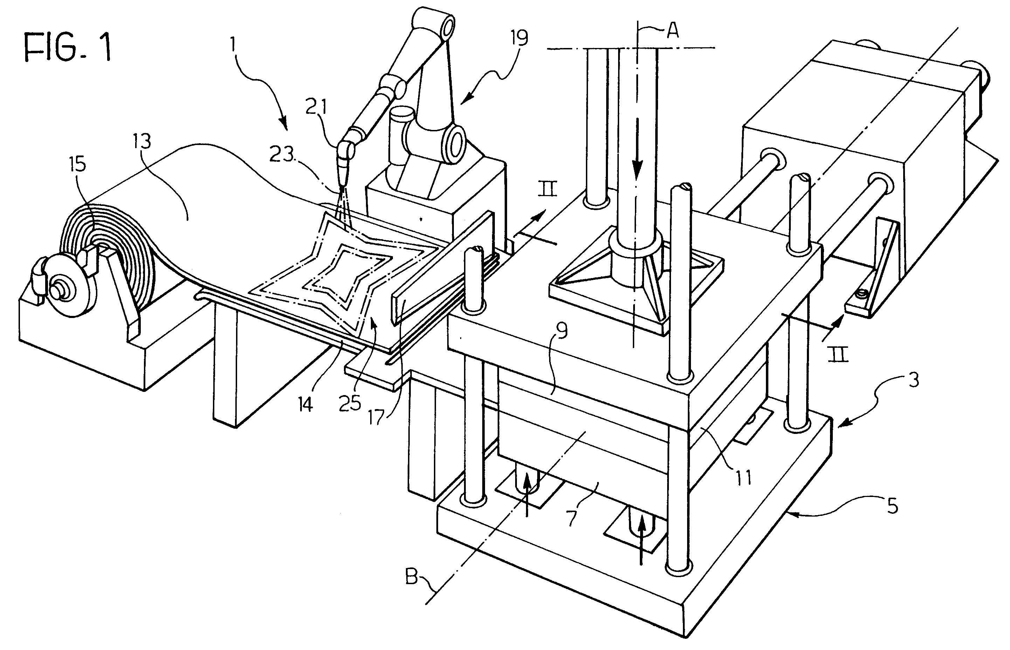

Figure 1 is a schematic, perspective view of plant for implementing the method of the invention,

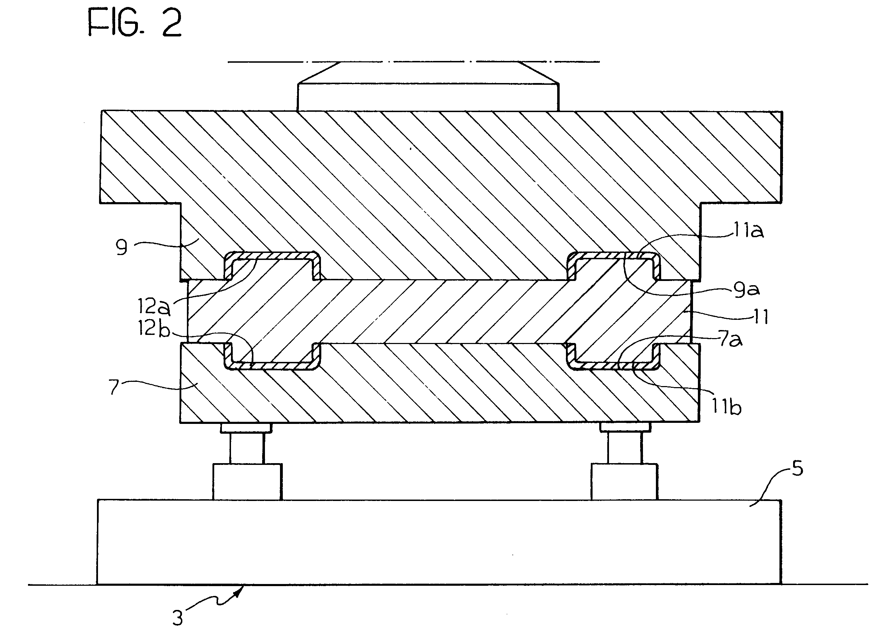

Figure 2 is a side elevational view sectioned on the line II-II of Figure 1,

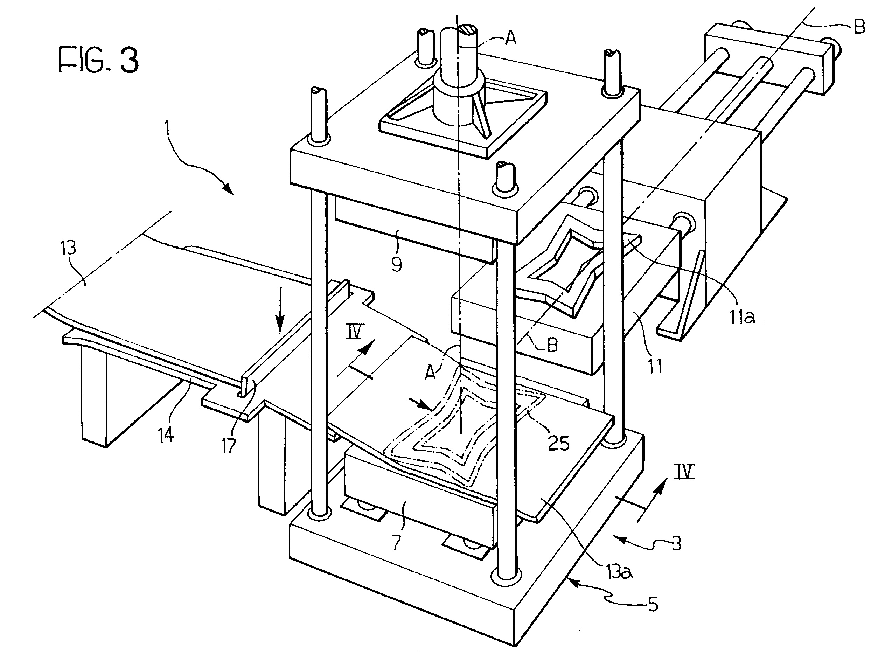

Figure 3 is a view similar to Figure 1 of a different moment during the implementation of the method,

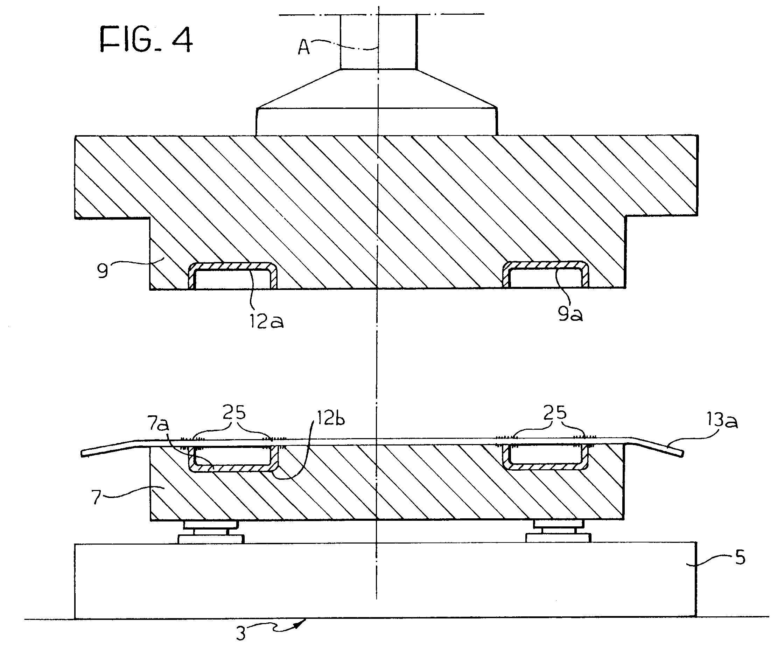

Figure 4 is a side elevational view sectioned on the line IV-IV of Figure 3,

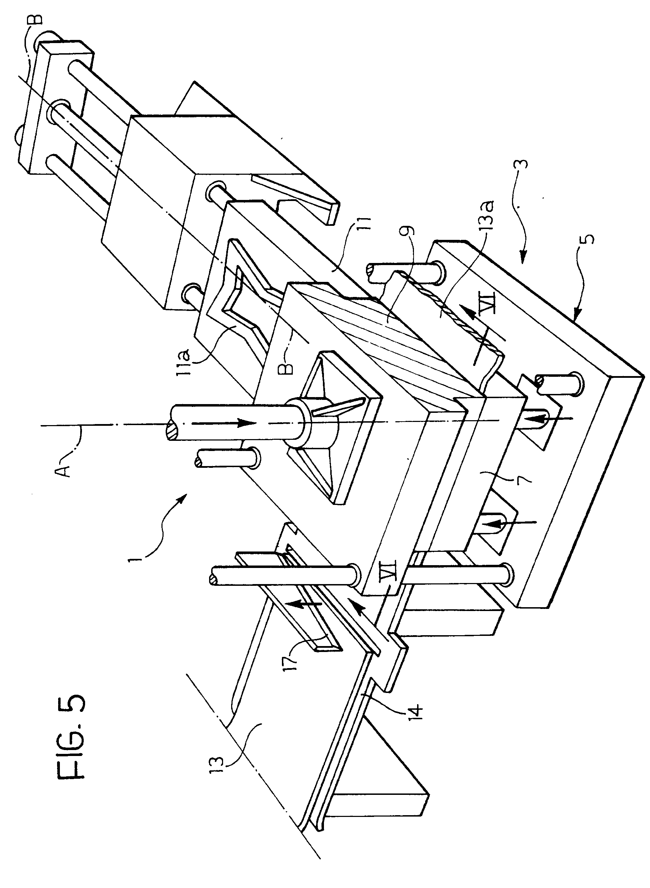

Figure 5 is a view similar to Figure 3 of a stage of the coupling of the elements of the structure,

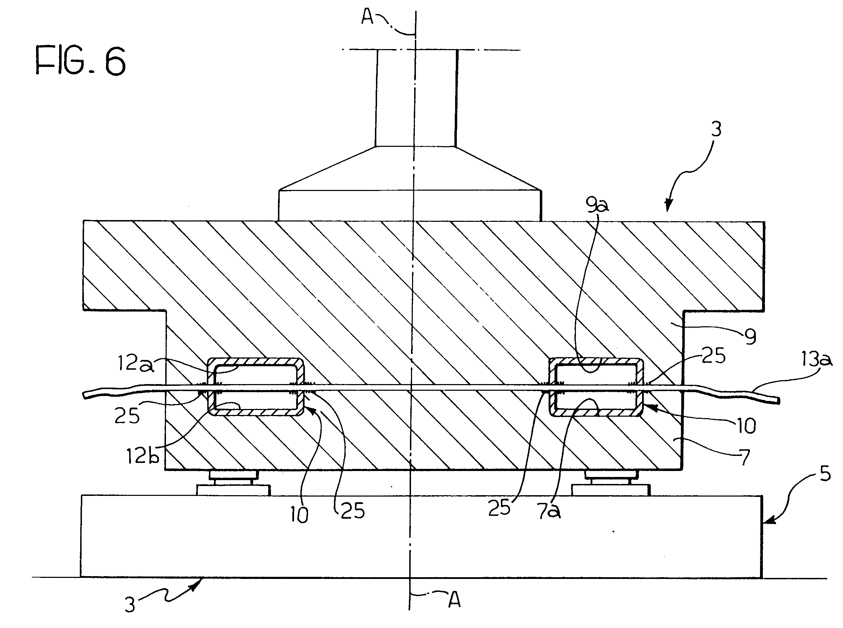

Figure 6 is a side elevational view sectioned on the line VI-VI of Figure 5,

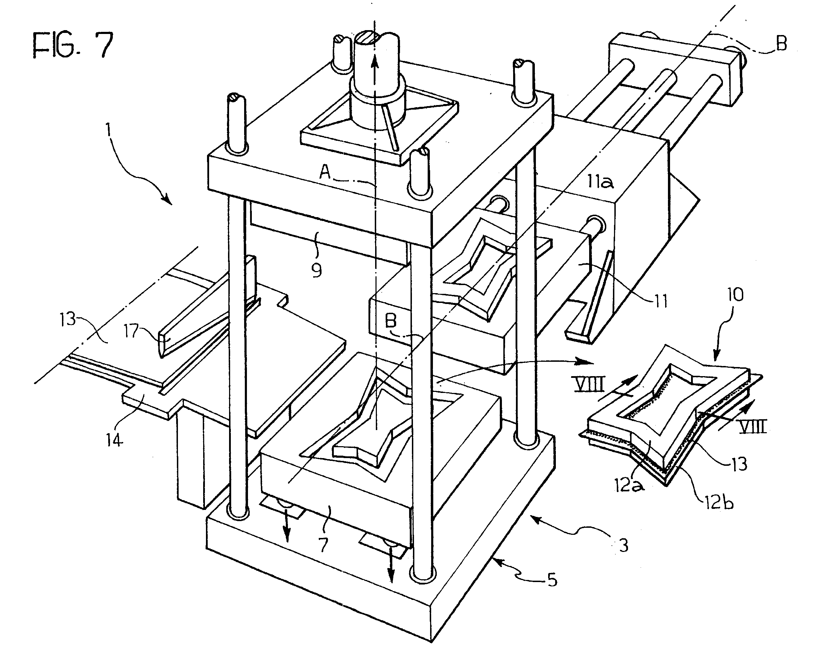

Figure 7 is a schematic, perspective view corresponding to a final stage of the production cycle of the structure,

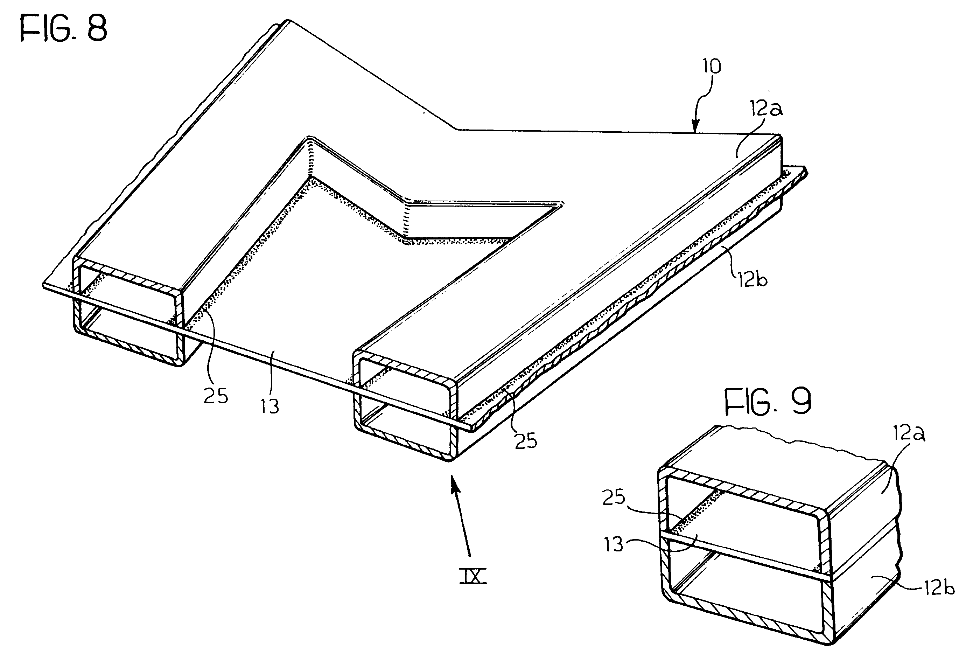

Figure 8 is a perspective view of the structure which can be produced by means of the method according to the invention, sectioned on the line VIII-VIII of Figure 7, and

Figure 9 is a view of a detail indicated by the arrow IX in Figure 8, on an enlarged scale.

With reference to the drawings, a plant, generally indicated 1, is for producing a shell-like structure 10 of plastics material of the thermoplastic or thermosetting type, which is formed by the gluing of two half-shells 12a, 12b along their coupling surfaces, and which can be used, for example, as an auxiliary structure for supporting a propulsion unit of a motor vehicle.

The plant 1 comprises a press 3 having a base 5 which supports a pair of main plate-shaped dies 7 and 9 which have respective mutually facing cavities 7a and 9a defining the external shapes of the half-shells 12a, and 12b. The dies 7 and 9 are movable relative to the base 5 along a common axis A which is normally oriented vertically, so that the press 3 is generally known as a vertical press.

An intermediate die or punch 11, associated with the press 3, is movable relative to the dies 7 and 9 along an axis B transverse the axis A so that the punch 11 can be moved from a position in which it is disposed beside and outside the press 3 and another position in which it is interposed between the main dies 7 and 9.

The opposed faces of the punch 11 are formed so as to have shaped projections 11a and 11b facing the cavities 9a and 7a, respectively, for defining the internal surfaces of the half-shells 12a, 12b.

Near the press 3 is a backing sheet 13 made of a thin and porous material, for example, of fibres of plastics material arranged in a woven or non-woven fabric-like structure the purpose of which will be explained further in the following description.

The sheet 13 is arranged with an end portion thereof on a table 14 adjacent the press 3 and can be unwound from a roll 15. Advantageously, means for cutting the sheet 13, constituted, for example, by a movable blade 17, are associated with the table 14.

Beside the backing sheet 13, near the table 14, is an anthropomorphic robot 19, the arm of which supports a head 21 for supplying an adhesive material 23 in the fluid state. Both the movements of the robot 19 and the operation of the head 21 are advantageously subservient to electronic control means, for example, of the digital type, which also control the operation of the press 3.

The half-shells 12a, 12b are formed separately and simultaneously in the course of a single hot-moulding operation in the press 3, inside a pair of moulding forms defined between the cavity 7a and the projection 11b and between the cavity 9a and the projection 11a, respectively.

The adhesive material 23 which may, for example, be of the polyurethane or epoxy type, is spread on a single face of the backing sheet 13 by means of the supply head 21, simultaneously with the moulding of the half-shells 12a and 12b in the press 3.

Owing to the type of material used for the sheet 13 which, as stated above, is thin and porous, the adhesive material 23 soaks into the sheet 13 from the face on which it is spread until it also reaches its opposite face.

The supply head 21 is controlled so as to spread the adhesive material 23 along a predetermined outline 25 at least corresponding to the coupling surfaces of the half-shells 12a, 12b. The outline 25 is preferably wider than the coupling surfaces of the half-shells 12a, 12b, alone so as to compensate for any errors in the subsequent positioning of the sheet 13 between the main dies 7 and 9.

Upon completion of the moulding of the half-shells 12a, 12b, the dies 7 and 9 are opened and they both move along the axis A away from the intermediate die 11, retaining the respective half-shells 12a, 12b.

The die 11 is then moved away from the press 3 along the axis B and, almost simultaneously, the sheet 13 is fed between the dies 7 and 9 by means of a transfer device of known type, for example, a mechanical arm (not shown in the drawings), so that the outline 25 of the adhesive material 23 is disposed adjacent the coupling surfaces of the half shells 12a, 12b. The mechanical arm is also subservient to the electronic control means which govern the operation of the press 3 and of the robot 19.

When the outline 25 is correctly positioned along the coupling surfaces of the half-shells 12a, 12b, the main dies 7, 9 are closed again, moving towards one another along the line defined by the axis A until they are brought into mutual contact.

The sheet 13 bearing the adhesive material 23 is thus gripped between the dies 7 and 9 so that the adhesive material 23 is disposed in contact with the coupling surfaces of the half-shells 12a, 12b and is spread thereon as a result of the compression effect exerted by the press 3.

The blade 17 enables the portion of the sheet 13 with the adhesive material 23 to be separated from the rest of the sheet 13.

As stated above, the dies 7 and 9 and the half-shells 12a and 12b store heat in the course of the moulding operation. Their temperature may be greater than 100°C upon completion of the moulding of the half-shells. Since the opening of the dies 7 and 9 lasts for the very short time necessary simply to feed the sheet 13 between them, a minimal portion of the heat stored by the dies 7 and 9 and by the half-shells 12a and 12b is dissipated to the atmosphere and their residual heat is thus used to bring about prepolymerization of the adhesive material 23 during the coupling of the half-shells 12a and 12b.

Upon completion of the prepolymerization of the adhesive material 23, the dies 7 and 9 are opened so that the structure 10 can be removed therefrom.

In this case, residual portions of the sheet 13 will project from the structure 10 and can be removed manually to finish the outer surface of the structure 10.

Alternatively, the dies 7 and 9 may have cutting portions near the cavities 7a and 9a so that preliminary finishing of the outer surface of the structure 10 can be achieved during the coupling and gluing of the half-shells 12a, 12b.

The method according to the invention thus considerably reduces the times taken by the production cycle of the shell-like structure 10, avoiding the use of operators, who would be forced to operate in extremely harsh environmental conditions, to spread the adhesive material along the coupling surfaces of the half-shells 12a, 12b, and, moreover, advantageously enables use to be made of the residual heat of the main dies 7 and 9.

Some characteristics of a material usable to produce the half-shells 12a, 12b of the structure 10, of possible constituents of an adhesive material 23 usable in the method, and of a sheet 13 usable as a backing for the adhesive 23 are given below, purely by way of example, according to the results which emerged from experimental tests carried out by the Applicant.

Both of the half-shells 12a, 12b were made of SMC (sheet moulding compound) composite material. The reinforcing fibre used was 30% by weight of a filler of E-type glass impregnated with a resin having the following characteristics:

|  | Parts by volume | % by volume |
|---|---|---|
| - polyester resin:OCF E-955 | 75 | 27.8 |
| - thermoplastic additive:OCF E-571 | 25 | 9.3 |
| - catalyst: tertiary butyl perbenzoate | 1 | 9.3 |
| - release agent:Zn stearate | 4 | 1.5 |
| - polyethylene powder | 6 | 2.0 |
| - calcium carbonate filler | 150 | 55.6 |
| - pigment paste | 8 | 3.0 |
| - thickener: Mg oxide | 1 | 0.4 |
| Total | 270 | 100.0 |

in which OCF (Owens Corning Fibreglass) is an abbreviation identifying a manufacturer.

After complete polymerization, the SMC had the following mechanical properties:

| | |
|---|---|
| - flexural strength | 230 MPa |
| - flexural modulus | 14 GPa |
| - tensile strength | 137 MPa |
| - tensile modulus | 17 GPa |
| - compressive strength | 203 MPa |
| - extensibility under tension | 1.5 % |
| - Izod impact strength (with notch) | 117 J/M of notch x 10 |
| - thermal conductivity | $0.25 W.m/m^2.°C$ |
| - specific heat | 1.46 KJ/kg.°C |
| - flammability (UL classification) | Category 945V |
| - Rockwell hardness | 112 |
| - dielectric strength | $1800 V/m \times 10^4$ |
| - specific weight | 2.1 |
| - heat distortion point | 260°C at 1.9 MPa |
| - continuous service temperature | 204°C |
| - coefficient of thermal expansion | $211/°C \times 10^{-6}$ |

in which the abbreviation UL indicates the firm Underwriters Laboratories Inc.

The adhesive material used was a structural two-part polyurethane adhesive suitable for automatic supply which includes a resin A and a resin B.

Resin A was a complex mixture made up as follows, in percentages by weight of the components:

| | |
|---|---|
| - glycols | 50 % |
| - calcium carbonate | 40 % |
| - amorphous silica | 0.2 % |
| - aliphatic amines | 0.8 % |
| - zeolite (silicates) | 7 % |
| - titanium oxide | 2 %. |

Resin A had a viscosity of between 200,000 and 230,000 mPas and a specific weight of 1.4 ± 0.05 g/ml.

Resin B was a complex mixture made up as follows in percentages by weight of the components:

| | |
|---|---|
| - MDI aromatic isocyanates | 30 % |
| - Al silicate | 15 % |
| - calcium carbonate | 50 % |
| - phthalic plasticizer | 5 %. |

Resin B had a viscosity of between 100,000 and 140,000 mPas and had a specific weight of 1.7 ± 0.05 g/ml.

The adhesive material was produced by mixing resins A and B with a mixing ratio of:

| - by weight | part A: | 100 |
|---|---|---|
| | part B: | 130 |
| - by volume | part A: | 100 |
| | part B: | 100 |

and had a post-life of 8÷14 minutes, a slippage ≤ 2.5 mm and a resistance to separation under shear of 50 daN/cm$^2$ after a cycle of 10 minutes at 80°C plus 7 days at ambient temperature for two sheets of SMC free of powder and connected to one another.

A polyester, polyamide or polypropylene fabric may be used for the backing sheet 13, in a woven or non-woven variant. A sheet used by the Applicant was non-woven polyester fabric having the following characteristics expressed in terms of quantities according to ASTM (American Society for Testing Materials) standards and physical quantities:

| | ASTM test | physical quantities |
|---|---|---|
| - basic weight | D-3776 | 20 g/m$^2$ |
| - longitudinal/transverse tearing strength | D-1682 | 60/60 N |
| - extensibility upon longitudinal/transverse tearing | D-1682 | 45/50 % |
| - thickness | D-1777 | 0.11 mm. |

## Claims

1.  A method of connecting a pair of elements of a structure by gluing, comprising the following steps:

    -  forming, in a single press (3) and in mutually facing positions, first and second elements (12a, 12b) which can be connected by gluing along their coupling surfaces,

    -  interposing an adhesive material (23) between the coupling surfaces of the elements (12a,12b), and

    -  coupling the elements (12a, 12b) by subjecting them to compression in the press (3),
       characterized in that it also comprises the steps of:

    -  providing a backing sheet (13),

    -  spreading the adhesive material (23) on the backing sheet (13) at least along a predetermined outline (25) corresponding to the coupling surfaces of the elements (12a, 12b),

    -  feeding the backing sheet (13) between the two elements (12a, 12b) so that the adhesive material (23) is disposed at least along said coupling surfaces, and

    -  coupling the elements (12a, 12b) with the interposition of the backing sheet (13) bearing the adhesive material (13).

2.  A method according to Claim 1, characterized in that the elements are two half-shells (12a, 12b) which are intended to form a shell-like structure (10) in their coupled condition, and in that both of the two half-shells (12a, 12b) are made of plastics material.

3.  A method according to Claim 2, characterized in that the adhesive material (23) is a polymerizable plastics adhesive which undergoes a prepolymerization process in the course of the coupling of the two half-shells (12a, 12b).

4. A method according to any one of Claims 1 to 3, characterized in that the backing sheet (13) is thin and is made of a porous material so that the adhesive material applied to only one face of the backing sheet (13) soaks into it until it reaches the opposite face.

5. A method according to any one of Claims 1 to 4, characterized in that the press (3) comprises a pair of parallel main dies (7, 9) movable relative to one another along a common axis of movement (A) between a position in which they are spaced apart and a position in which they are close together, and an intermediate die (11) movable transverse the axis of movement (A) of the two main dies (7, 9), the dies (7, 9, 11) being able to adopt a closed moulding configuration in which both of the main dies (7, 9) are brought close to the intermediate die (11) so that respective cavities (7a, 9a) defining the shapes of the half-shells (12a, 12b) are defined between the main dies (7, 9) and the intermediate die (11), and an open configuration in which the main dies (7, 9) are spaced apart and the intermediate die (11) is moved away from the common axis of movement (A) of the main dies (7, 9).

6. A method according to Claim 5, characterized in that transfer means provided for the backing sheet (13) can feed it between the two main dies (7, 9) in their open configuration.

7. A method according to Claim 6, characterized in that the transfer means comprise a mechanical arm.

8. A method according to Claim 7, characterized in that there are supply means (21) for spreading the adhesive material (23) along the predetermined outline (25) on the backing sheet (13) and in that the supply means (21) are subservient to electronic control means.

9. A method according to Claim 8, characterized in that the supply means (21) are associated with an anthropomorphic robot (19).

10. A method according to any one of Claims 2 to 9, characterized in that the step of spreading the adhesive material (23) on the backing sheet (13) is carried out simultaneously with the step of moulding the half-shells (12a, 12b).

11. A method according to Claim 10, characterized in that the step of feeding the backing sheet (13) between the two half-shells (12a, 12b) is carried substantially simultaneously with the movement of the intermediate die (11) away from the two main dies (7, 9).

12. A plant for forming a shell-like structure including a pair of half-shells of plastics material which can be connected by gluing, comprising in combination:

- a press (3) having a pair of parallel main dies (7, 9) movable relative to one another along a common axis of movement (A) between a position in which they are spaced apart and a position in which they are close together, and an intermediate die (11) movable transverse the axis of movement (A) of the two main dies (7, 9), in which the dies (7, 9, 11) can adopt a closed moulding configuration in which both of the main dies (7, 9) are brought close to the intermediate die (11) so that respective cavities (7a, 9a) defining the shapes of the half-shells (12a, 12b) are defined between the main dies (7, 9) and the intermediate die (11) and an open configuration in which the main dies (7, 9) are spaced apart and the intermediate die (11) is moved away from the common axis of movement (A) of the main dies (7, 9),
  characterised in that it further comprises:

- a backing sheet (13) disposed close to the press (3),

- supply means (21) for spreading an adhesive material (23) on the backing sheet (13) at least along a predetermined outline (25) corresponding to the coupling surfaces of the half-shells (12a, 12b),

- transfer means for the backing sheet (13) for feeding it between the two main dies (7, 9) in their open configuration, adjacent the coupling surfaces of the elements (12a, 12b).

13. A plant according to Claim 12, characterized in that it comprises electronic means for controlling the operation of the press (3), of the transfer means and of the supply means (21).

14. A plant according to Claim 12 or Claim 13, characterized in that it comprises electronic control means for controlling the supply means (21) so as they spread the adhesive material (23) on the backing sheet (13) during the moulding of the half-shells (12a, 12b) in the press (3).

15. A plant according to Claim 14, characterized in that the supply means (21) are associated with an anthropomorphic robot (19).

16. A plant according to any one of Claims 12 to 15, characterized in that it comprises means for feeding the backing sheet (13) bearing the adhesive material (23) between the two half-shells (12a, 12b) and substantially simultaneously moving the intermediate die (11) away from the two main dies (7, 9).

17. A plant according to any one of Claims 12 to 16, characterized in that the transfer means comprise a mechanical arm.

18. A plant according to Claim 16 or Claim 17, characterized in that the backing sheet (13) is unwound from a roll onto a table (14) with which means (17) for cutting the backing sheet (13) are associated.

19. A plant according to Claim 18, characterized in that members for cutting the backing sheet (13) in order to finish the outer surface of the shell-like structure (10) are associated with the main dies (7, 9).

**Patentansprüche**

1. Verfahren, um ein Paar von Elementen eines Aufbaus durch Kleben zu verbinden, wobei das Verfahren folgende Schritte enthält:

   - Ausbilden in einer Einzelpresse (3) und in einander gegenüberliegenden Stellungen von einem ersten und einem zweiten Element (12a, 12b), die miteinander längs ihrer Verbindungsflächen verklebt werden können,
   - Einbringen eines Klebstoffs (23) zwischen die Verbindungsflächen der Elemente (12a, 12b), und
   - Verbinden der Elemente (12a, 12b), indem diese in der Presse (3) einem Druck unterworfen werden, dadurch gekennzeichnet, dass das Verfahren weiters folgende Schritte enthält:
   - Vorsehen einer Trägerfolie (13),
   - Auftragen des Klebstoffs (23) auf die Trägerfolie (13) zumindest längs eines vorgegebenen Umrisses (25), der den Verbindungsflächen der Elemente (12a, 12b) entspricht,
   - Einfuhren der Trägerfolie (13) zwischen die beiden Elemente (12a, 12b), so dass der Klebstoff (23) zumindest entlang der Verbindungsflächen angeordnet wird, und
   - Verbinden der Elemente (12a, 12b), wobei die Tragerfolie (13) dazwischen liegt, die den Klebstoff (23) trägt.

2. Verfahren gemäß Anspruch 1, dadurch gekennzeichnet, dass die Elemente zwei Halbschalen (12a, 12b) sind, die in ihrem zusammengebauten Zustand einen schalenartigen Aufbau (10) bilden sollen, und dass jede der beiden Halbschalen (12a, 12b) aus Kunststoff hergestellt ist.

3. Verfahren gemäß Anspruch 2, dadurch gekennzeichnet, dass der Klebstoff (23) ein polymerisierbarer Kunststoffkleber ist, der beim Verbinden der beiden Halbschalen (12a, 12b) einer Polymerisation unterworfen wird.

4. Verfahren gemäß irgendeinem der Ansprüche 1 bis 3, dadurch gekennzeichnet, dass die Trägerfolie (13) dünn ist und aus einem porösen Material besteht, so dass der Klebstoff, der nur auf eine Fläche der Trägerfolie (13) aufgetragen wird, in die Folie sickert, bis er die gegenüberliegende Fläche erreicht.

5. Verfahren gemäß irgendeinem der Ansprüche 1 bis 4, dadurch gekennzeichnet, dass die Presse (3) ein Paar von parallelen Hauptformen (7, 9) enthält, die relativ zueinander längs einer gemeinsamen Bewegungsachse (A) zwischen einer Stellung, in der sie voneinander beabstandet sind, und einer Stellung bewegbar sind, in der sie nahe beisammen liegen, sowie eine Zwischenform (11) enthält, die quer zur Bewegungsachse (A) der beiden Hauptformen (7, 9) bewegbar ist, wobei die Formen (7, 9, 11) einen geschlossenen Formzustand einnehmen können, in dem die beiden Hauptformen (7, 9) nahe zur Zwischenform (11) gebracht werden, so dass entsprechende Hohlräume (7a, 9a), die die Gestalt der Halbschalen (12a, 12b) bestimmen, zwischen den Hauptformen (7, 9) und der Zwischenform (11) gebildet werden, und einen offenen Zustand einnehmen können, in dem die Hauptformen (7, 9) voneinander beabstandet sind und die Zwischenform (11) von der gemeinsamen Bewegungsachse (A) der Hauptformen (7, 9) wegbewegt wird.

6. Verfahren gemäß Anspruch 5, dadurch gekennzeichnet, dass die Transporteinrichtung, die für die Trägerfolie (13) vorgesehen ist, die Trägerfolie zwischen die beiden Hauptformen (7, 9) einführen kann, wenn sich diese in ihrem offenen Zustand befinden.

7. Verfahren gemäß Anspruch 6, dadurch gekennzeichnet, dass die Transporteinrichtung einen mechanischen Arm enthält.

8. Verfahren gemäß Anspruch 7, dadurch gekennzeichnet, dass eine Zuführeinrichtung (21) vorgesehen ist, um den Klebstoff (23) entlang des vorgegebenen Umrisses (25) auf der Trägerfolie (13) aufzutragen, und dass die Zuführeinrichtung (21) einer elektronischen Steuereinrichtung untergeordnet ist.

9. Verfahren gemäß Anspruch 8, dadurch gekennzeichnet, dass der Zuführeinrichtung (21) ein anthropomorpher Roboter (19) zugeordnet ist.

10. Verfahren gemäß irgendeinem der Ansprüche 2 bis 9, dadurch gekennzeichnet, dass der Schritt, in dem der Klebstoff (23) auf der Trägerfolie (13) aufgetragen wird, gleichzeitig mit dem Schritt ausgeführt wird, in dem die Halbschalen (12a, 12b) gepresst werden.

11. Verfahren gemäß Anspruch 10, dadurch gekennzeichnet, dass der Schritt, bei dem die Trägerfolie (13) zwischen die beiden Halbschalen (12a, 12b) eingeführt wird, im wesentlichen gleichzeitig ausgeführt wird, wenn sich die Zwischenform (11) von den beiden Hauptformen (7, 9) wegbewegt.

12. Anlage, um einen schalenartigen Aufbau herzustellen, der ein Paar von Halbschalen aus Kunststoff aufweist, die durch Kleben verbunden werden können, wobei die Anlage in Kombination enthält:

   - eine Presse (3) mit einem Paar von parallelen Hauptformen (7, 9), die relativ zueinander längs einer gemeinsamen Bewegungsachse (A) zwischen einer Stellung, in der sie voneinander beabstandet sind, und einer Stellung bewegbar sind, in der sie nahe beisammen liegen, sowie mit einer Zwischenform (11), die quer zur Bewegungsachse (A) der beiden Hauptformen (7, 9) bewegbar ist, wobei die Formen (7, 9, 11) einen geschlossenen Formzustand, in dem beide Hauptformen (7, 9) nahe zur Zwischenform (11) gebracht werden, so dass entsprechende Hohlräume (7a, 9a), die die Gestalt der Halbschalen (12a, 12b) festlegen, zwischen den Hauptformen (7, 9) und der Zwischenform (11) gebildet werden, sowie einen offenen Zustand einnehmen können, in dem die Hauptformen (7, 9) voneinander beabstandet sind und die Zwischenform (11) von der gemeinsamen Bewegungsachse (A) der Hauptformen (7, 9) wegbewegt wird,
   dadurch gekennzeichnet, dass die Anlage weiters enthält:
   - eine Trägerfolie (13), die in der Nähe der Presse (3) angeordnet ist,
   - eine Zuführeinrichtung (21), um einen Klebstoff (23) auf die Trägerfolie (13) zumindest entlang eines vorgegebenen Umrisses (25) aufzutragen, der den Verbindungsflächen der Halbschalen (12a, 12b) entspricht,
   - eine Transporteinrichtung für die Trägerfolie (13), um die Trägerfolie zwischen die beiden Hauptformen (7, 9), wenn sich diese in ihrem offenen Zustand befinden, neben die Verbindungsflächen der Elemente (12a, 12b) einzuführen.

13. Anlage gemäß Anspruch 12, dadurch gekennzeichnet, dass die Anlage eine elektronische Einrichtung enthält, um die Arbeitsweise der Presse (3), der Transporteinrichtung und der Zuführeinrichtung (21) zu steuern.

14. Anlage gemäß Anspruch 12 oder 13, dadurch gekennzeichnet, dass die Anlage eine elektronische Steuereinrichtung enthält, um die Zuführeinrichtung (21) so zu steuern, dass sie den Klebstoff (23) auf die Folie (13) aufträgt, während die Halbschalen (12a, 12b) in der Presse (3) gepresst werden.

15. Anlage gemäß Anspruch 14, dadurch gekennzeichnet, dass der Zuführeinrichtung (21) ein anthropomorpher Roboter (19) zugeordnet ist.

16. Anlage gemäß irgendeinem der Ansprüche 12 bis 15, dadurch gekennzeichnet, dass die Anlage eine Einrichtung enthält, um die Folie (13), die den Klebstoff (23) trägt, zwischen die beiden Halbschalen (12a, 12b) einzuführen und im wesentlichen gleichzeitig die Zwischenform (11) von den beiden Hauptformen (7, 9) wegzubewegen.

17. Anlage gemäß irgendeinem der Ansprüche 12 bis 16, dadurch gekennzeichnet, dass die Transporteinrichtung einen mechanischen Arm enthält.

**18.** Anlage gemäß Anspruch 16 oder 17, dadurch gekennzeichnet, dass die Trägerfolie (13) von einer Rolle auf einen Tisch (14) abgewickelt wird, dem eine Einrichtung (17) zugeordnet ist, um die Trägerfolie (13) zu schneiden.

**19.** Anlage gemäß Anspruch 18, dadurch gekennzeichnet, dass Elemente zum Schneiden der Trägerfolie (13) den Hauptformen (7, 9) zugeordnet sind, um die Außenfläche des schalenartigen Aufbaus (10) fertigzustellen.

**Revendications**

**1.** Procédé de raccordement d'une paire d'éléments d'une structure par collage, comportant les étapes suivantes:

- formation, dans une unique presse (3) et dans des positions se faisant mutuellement face, de premier et deuxième éléments (12a, 12b) qui peuvent être raccordés par collage le long de leurs surfaces de liaison,
- interposition d'une matière adhésive (23) entre les surfaces de liaison des éléments (12a, 12b), et
- raccordement des éléments (12a, 12b) en les soumettant à une compression dans la presse (3), caractérisé en ce qu'il comporte également les étapes consistant à:
- prévoir une feuille de support (13),
- étaler la matière adhésive (23) sur la feuille de support (13) au moins le long d'un contour prédéterminé (25) correspondant aux surfaces de liaison des éléments (12a, 12b),
- amener la feuille de support (13) entre les deux éléments (12a, 12b) de sorte que la matière adhésive (23) est disposée au moins le long desdites surfaces de liaison, et
- raccorder les éléments (12a, 12b) avec l'interposition de la feuille de support (13) supportant la matière adhésive (23).

**2.** Procédé selon la revendication 1, caractérisé en ce que les éléments sont deux demi-coques (12a, 12b) qui sont prévues pour former une structure en forme de coque (10) dans leur condition raccordée, et en ce que les deux demi-coques (12a, 12b) sont toutes deux fabriquées en matière plastique.

**3.** Procédé selon la revendication 2, caractérisé en ce que la matière adhésive (23) est un adhésif plastique polymérisable qui subit un processus de pré-polymérisation au cours du raccordement des deux demi-coques (12a, 12b).

**4.** Procédé selon l'une quelconque des revendications 1 à 3, caractérisé en ce que la feuille de support (13) est mince et est fabriquée dans une matière poreuse de sorte que la matière adhésive appliquée sur une seule face de la feuille de support (13) pénètre dedans jusqu'à ce qu'elle atteigne la face opposée.

**5.** Procédé selon l'une quelconque des revendications 1 à 4, caractérisé en ce que la presse (3) comporte une paire de matrices principales parallèles (7, 9) mobiles l'une par rapport à l'autre le long d'un axe de déplacement commun (A) entre une position dans laquelle elles sont espacées et une position dans laquelle elles sont rapprochées, et une matrice intermédiaire (11) mobile transversalement à l'axe de déplacement (A) des deux matrices principales (7, 9), les matrices (7, 9, 11) étant capables d'adopter une configuration de moulage fermée dans laquelle les deux matrices principales (7, 9) sont rapprochées de la matrice intermédiaire (11) de sorte que des cavités (7a, 9a) respectives définissant les formes des demi-coques (12a, 12b) sont définies entre les matrices principales (7, 9) et la matrice intermédiaire (11), et une configuration ouverte dans laquelle les matrices principales (7, 9) sont espacées et la matrice intermédiaire (11) est déplacée à l'écart de l'axe commun de déplacement (A) des matrices principales (7, 9).

**6.** Procédé selon la revendication 5, caractérisé en ce que des moyens de transfert prévus pour la feuille de support (13) peuvent l'avancer entre les deux matrices principales (7, 9) dans leur configuration ouverte.

**7.** Procédé selon la revendication 6, caractérisé en ce que les moyens de transfert comportent un bras mécanique.

**8.** Procédé selon la revendication 7, caractérisé en ce qu'il y a des moyens d'alimentation (21) destinés à étaler la matière adhésive (23) le long du contour prédéterminé (25) sur la feuille de support (13) et en ce que les moyens d'alimentation (21) sont supervisés par des moyens de commande électroniques.

**9.** Procédé selon la revendication 8, caractérisé en ce que les moyens d'alimentation (21) sont associés à un robot anthropomorphique (19).

**10.** Procédé selon l'une quelconque des revendications 2 à 9, caractérisé en ce que l'étape d'étalement de la matière adhésive (23) sur la feuille de support (13) est réalisée simultanément avec l'étape de moulage des demi-coques (12a, 12b).

11. Procédé selon la revendication 10, caractérisé en ce que l'étape d'avance de la feuille de support (13) entre les deux demi-coques (12a, 12b) est réalisée sensiblement simultanément avec le déplacement de la matrice intermédiaire (11) à l'écart des deux matrices principales (7, 9).

12. Installation pour la production d'une structure en forme de coque comprenant une paire de demi-coques en matière plastique qui peuvent être reliées par collage, comportant en combinaison:

- une presse (3) ayant une paire de matrices principales parallèles (7, 9) mobiles l'une par rapport à l'autre le long d'un axe commun de déplacement (A) entre une position dans laquelle elles sont espacées et une position dans laquelle elles sont rapprochées, et une matrice intermédiaire (11) mobile transversalement à l'axe de déplacement (A) des deux matrices principales (7, 9), dans laquelle les matrices peuvent adopter une configuration de moulage fermée dans laquelle les deux matrices principales (7, 9) sont rapprochées de la matrice intermédiaire (11) de telle sorte que des cavités (7a, 9a) respectives définissant les formes des demi-coques (12a, 12b) sont définies entre les matrices principales (7, 9) et la matrice intermédiaire (11), et une configuration ouverte dans laquelle les matrices principales (7, 9) sont espacées et la matrice intermédiaire (11) est déplacée à l'écart de l'axe commun de déplacement (A) des matrices principales (7, 9),
caractérisée en ce qu'elle comporte en outre:
- une feuille de support (13) disposée près de la presse (3),
- des moyens d'alimentation (21) destinés à étaler une matière adhésive (23) sur la feuille de support (13) au moins le long d'un contour prédéterminé (25) correspondant aux surfaces de liaison des demi-coques (12a, 12b),
- des moyens de transfert pour la feuille de support (13) destinés à l'avancer entre les deux matrices principales (7, 9) dans leur configuration ouverte, de façon adjacente aux surfaces de liaison des éléments (12a, 12b).

13. Installation selon la revendication 12, caractérisée en ce qu'elle comporte des moyens électroniques destinés à commander le fonctionnement de la presse (3), des moyens de transfert et des moyens d'alimentation (21).

14. Installation selon la revendication 12 ou la revendication 13, caractérisée en ce qu'elle comporte des moyens de commande électroniques destinés à commander les moyens d'alimentation (21) de façon à ce qu'ils étalent la matière adhésive (23) sur la feuille de support (13) pendant le moulage des demi-coques (12a, 12b) dans la presse (3).

15. Installation selon la revendication 14, caractérisée en ce que les moyens d'alimentation (21) sont associés à un robot anthropomorphique (19).

16. Installation selon l'une quelconque des revendications 12 à 15, caractérisée en ce que qu'elle comporte des moyens destinés à avancer la feuille de support (13) supportant la matière adhésive (23) entre les deux demi-coques (12a, 12b) et à déplacer sensiblement simultanément la matrice intermédiaire (11) à l'écart des deux matrices principales (7, 9).

17. Installation selon l'une quelconque des revendications 12 à 16, caractérisée en ce que les moyens de transfert comportent un bras mécanique.

18. Installation selon la revendication 16 ou la revendication 17, caractérisée en ce que la feuille de support (13) est déroulée d'un rouleau sur une table (14) à laquelle des moyens (17) destinés à découper la feuille de support (13) sont associés.

19. Installation selon la revendication 18, caractérisée en ce que des éléments destinés à découper la feuille de support (13) afin de finir la surface extérieure de la structure en forme de coque (10) sont associés aux matrices principales (7, 9).

FIG. 1

# FIG. 2

FIG. 3

EP 0 693 361 B1

FIG. 4

EP 0 693 361 B1

FIG. 5

FIG. 6

EP 0 693 361 B1

FIG. 7

EP 0 693 361 B1

FIG. 8

FIG. 9